# EUROPÄISCHE PATENTSCHRIFT

(11) **EP 3 254 553 B1**
(45) Veröffentlichungstag und Bekanntmachung des Hinweises auf die Patenterteilung: **07.08.2019**
(21) Anmeldenummer: 16173506.3
(22) Anmeldetag: 08.06.2016
(51) Int. Cl.: A01D 80/00

(54) **VERFAHREN UND BEDIENSYSTEM ZUR VERSTELLUNG DER ARBEITSHÖHE VON SCHWADKREISELN EINES SCHWADERS**
METHOD AND OPERATING SYSTEM FOR ADJUSTING THE WORKING HEIGHT OF SPINNERS OF A RAKE
PROCEDE ET SYSTEME DE COMMANDE DESTINES A REGLER LA HAUTEUR DE TRAVAIL DE TOUPIES D'UNE ANDAINEUSE

(43) Veröffentlichungstag der Anmeldung: 13.12.2017
(73) Patentinhaber: Kverneland Group Kerteminde AS, 5300 Kerteminde (DK)
(72) Erfinder: Gohl, Stefan, 78244 Gottmadingen (DE); Bier, Klemens, 78250 Tengen (DE)
(74) Vertreter: Grünecker Patent- und Rechtsanwälte PartG mbB

(56) Entgegenhaltungen:
- WO-A1-2015/091058
- DE-A1-102010 046 938
- DE-U1-202007 001 281
- DE-U1-202009 004 721
- FR-A1- 3 025 974

## Beschreibung

Die Erfindung betrifft ein Verfahren zur Verstellung der Arbeitshöhe von Schwadkreiseln eines Schwaders und ein System mit den Merkmalen des Oberbegriffs von Anspruch 1 bzw. 10. Bei der Futterernte ist es üblich, nach dem Mähen auf der landwirtschaftlichen Nutzfläche abgelegtes Erntegut, wie beispielsweise Gras, mit einem Schwader zu einem Schwad zusammen zurechen, bevor es beispielsweise mit einem Ladewagen aufgenommen und abtransportiert wird. Üblicherweise wird dazu ein Zugfahrzeug und ein daran angehängter Schwader eingesetzt, der einen Tragrahmen mit einem oder mehreren davon quer zur Fahrtrichtung abstehend angeordneten Schwadkreiseln umfasst. Die Schwadkreisel werden jeweils aus einem Kreiselkopf und mehren daran umfänglich angeordneten Zinkenarmen gebildet, von deren Enden jeweils mehrere Zinken zum Boden hin abstehen. Durch die Drehbewegung der Schwadkreisel wird das auf der landwirtschaftlichen Nutzfläche verteilte Erntegut zum Schwad zusammengerecht.

Üblicherweise sind die Schwadkreisel gegenüber der landwirtschaftlichen Nutzfläche mit einer Höhenverstelleinrichtung in der Arbeitshöhe verstellbar. Die optimale Arbeitshöhe hängt unter anderem von der Beschaffenheit des Terrains und des Ernteguts ab und muss mit der Höhenverstelleinrichtung entweder vor, oder fernbedient während des Zusammenrechens eingestellt werden. Bei der fernbedienten Verstellung wird dazu üblicherweise ein Knopf oder ein Hebel so lange betätigt, bis die Höhenverstelleinrichtung die gewünschte Arbeitshöhe angefahren hat.

Beispielsweise ist aus der WO 2015/091058 A1 ein Schwader bekannt, bei der jeder Schwadkreisel mit mehreren Führungsrädern auf dem Untergrund abgestützt wird, wobei der Abstand der Führungsräder zum Schwadkreisel über einen elektrischen oder hydraulischen Aktuator höhenverstellbar ist. Dabei kann eine Höheneinstellung der Führungsräder in einem Speicher abgelegt und wieder abgerufen werden.

Aus der DE 20 2009 004 721 U1 ist eine Heuwerbungsmaschine mit einem Verstellmechanismus zum Verstellen des Abstands zwischen dem Zinkenarme aufnehmenden Kreiselkörper und den die Rechkreisel abstützenden Stützrädern des Fahrwerks bekannt, wobei ein Sensor als Wegaufnehmer den Verschiebeweg der Kolbenstange eines Stellzylinders erfasst.

Nachteilig dabei ist, dass die Arbeitshöhe während des Zusammenrechens von einer Bedienperson oftmals nur schwer einstellbar ist, da sie sowohl die Lenkung des Zugfahrzeugs als auch den Knopf bzw. Hebel zur Einstellung der Arbeitshöhe bedienen muss, bis die gewünschte Arbeitshöhe von der Höhenverstelleinrichtung angefahren ist.

Aufgabe der vorliegenden Erfindung ist es daher, ein Verfahren und ein Bediensystem zur Verstellung der Arbeitshöhe von Schwadkreiseln eines Schwaders bereitzustellen, mit dem die Arbeitshöhe einfacher eingestellt werden kann, so dass die Bedienperson nicht unnötig von der Lenkung des Zugfahrzeugs oder anderen Tätigkeiten abgelenkt wird.

Zur Lösung dieser Aufgabenstellung stellt die Erfindung ein Verfahren zur Verstellung der Arbeitshöhe von Schwadkreiseln eines Schwaders mit den Merkmalen des Anspruchs 1 bereit. Vorteilhafte Ausführungsformen sind in den Unteransprüchen genannt.

Dadurch, dass der Verstellweg der Höhenverstelleinrichtung in Hubintervallen unterteilt in der Steuereinrichtung abgelegt ist und die Bedienperson zur Verstellung der Arbeitshöhe die ganzzahlige Anzahl von Hubintervallen an der Eingabeeinheit eingibt, kann die Arbeitshöhe als besonders einfache Information in die Eingabeeinheit eingegeben werden. Da anschließend die Steuereinrichtung die Höhenverstelleinrichtung derart steuert, dass die Arbeitshöhe um die Anzahl der Hubintervalle automatisch verstellt wird, ist es nicht mehr notwendig, dass die Bedienperson einen Knopf bzw. Hebel betätigt hält, während die Höhenverstelleinrichtung die gewünschte Arbeitshöhe anfährt. Folglich ist die Arbeitshöhe besonders einfach einstellbar, so dass die Bedienperson nicht von der Lenkung des Zugfahrzeugs oder dergleichen abgelenkt wird.

Der Schwader kann von einem Zugfahrzeug gezogen werden, der vorzugsweise ein Traktor ist. Üblicherweise umfasst das Zugfahrzeug einen Fahrzeugrahmen, an dem ein Motor mit einem Getriebe angeordnet ist, durch das mehrere Räder zur Fortbewegung und zum Ziehen des Schwaders angetrieben werden. Weiter kann das Zugfahrzeug eine Kabine für die Bedienperson aufweisen, in der mehrere Bedienelemente zum Steuern des Zugfahrzeugs und/oder des Schwaders angeordnet sind. Darüber hinaus kann das Zugfahrzeug eine Anhängevorrichtung zum Anhängen des Schwaders sowie eine Zapfwelle zur Übertragung einer Antriebskraft auf den Schwader aufweisen. Beispielsweise können mit der Antriebskraft die Schwadkreisel in eine Drehbewegung zum Zusammenrechen des Ernteguts gebracht werden.

Das Verfahren bzw. das Bediensystem kann zur Verstellung der Arbeitshöhe von einem, zwei, vier, sechs oder noch mehr Schwadkreiseln eines Schwaders geeignet bzw. ausgebildet sein. Die Schwadkreisel können dabei unabhängig voneinander, in Fahrtrichtung nur links, nur rechts, gruppenweise oder insgesamt in der Arbeitshöhe verstellt werden. Der Schwader kann einen Tragrahmen mit mehreren davon quer zur Fahrtrichtung abstehend angeordneten Schwadkreiseln umfassen. Die Schwadkreisel können mit verstellbaren Armen in eine Arbeitsposition zum Zusammenrechen in Eingriff mit dem Erntegut gebracht werden. In der Arbeitsposition können die Schwadkreisel parallel zur landwirtschaftlichen Nutzfläche angeordnet sein und/oder um ihre vertikalen Achsen rotieren. Zudem können die Schwadkreisel mit den verstellbaren Armen in eine Transport- und/oder Vorgewendeposition gebracht werden, bei denen die Schwadkreisel angehoben sind. Die verstellbaren Arme können hydraulisch oder elektrisch verstellt werden, beispielsweise mittels Hydraulikzylindern, Spindel- oder Zahnstangenantrieben.

Die Schwadkreisel können aus einem Kreiselkopf und mehren daran umfänglich angeordneten Zinkenarmen gebildet sein, von deren Enden jeweils mehrere Zinken zum Boden hin abstehen. Durch eine Rotation des Kreiselkopfs und der Zinkenarme wird das Erntegut zu einem Schwad zusammengerecht.

Die Höhenverstelleinrichtung kann einen oder mehrere hydraulische, pneumatische und/oder elektrische Antriebe umfassen, mit denen die Arbeitshöhe der Schwadkreisel eingestellt wird. Vorzugsweise kann der Antrieb als linearer Aktuator ausgebildet sein, insbesondere als Hydraulikzylinder, Spindel- oder Zahnstangenantrieb. Die Höhenverstelleinrichtung kann ein oder mehrere Stütz- oder Führungsräder umfassen, die vorzugsweise von jedem Schadkreisel nach unten abstehend und verfahrbar angeordnet sind. Dadurch können die Abstände der Schwadkreisel zur landwirtschaftlichen Nutzfläche als Arbeitshöhe verstellt werden. Die Stütz- oder Führungsräder können einzeln oder gruppenweise als Fahrwerk mit dem oben genannten Antrieb verstellt werden. Anders ausgedrückt kann die Höhenverstelleinrichtung mehrere Verstelleinrichtung umfassen, mit denen die Schwadkreisel jeweils einzelnen oder gruppenweise zur Einstellung der Arbeitshöhe höhenverstellbar sind. Die Verstelleinrichtungen können jeweils am Schwadkreisel angeordnet sein und einen oben genannten Antrieb, eine Kurbelverstellung und/oder ein oder mehrere Stütz-/Führungsräder umfassen. Denkbar ist auch, dass der Tragrahmen des Schwaders insgesamt über die Höhenverstelleinrichtung beispielsweise mittels verstellbarer Räder in der Arbeitshöhe verstellbar ist. Denkbar ist auch, dass die am Tragrahmen angeordneten, verstellbaren Arme als Höhenverstelleinrichtung eingesetzt werden.

Der Verstellweg kann ein maximaler Verstellweg der Höhenverstelleinrichtung sein. Ebenso kann der Verstellweg ein Teilbereich des maximalen Verstellwegs der Höhenverstelleinrichtung sein. Der Verstellweg kann beispielsweise in einem Bereich von 0 mm bis 150 mm, vorzugsweise in einem Bereich von 30 mm bis 100 mm liegen. Ebenso kann der maximale Verstellweg 100 Prozent betragen und vorzugsweise dem maximalen Verstellweg der Höhenverstelleinrichtung entsprechen. Dass "der Verstellweg in vorzugsweise gleich große Hubintervalle unterteilt in der Steuereinrichtung abgelegt ist" kann hier bedeuten, dass der Verstellweg in eine ganzzahlige Anzahl von Hubintervallen unterteilt ist. Bei gleichgroßen Hubintervallen kann die Bedienperson besonders einfach und ohne Rückmeldung die gewünschte Arbeitshöhe einstellen. Denkbar ist auch, dass es sich um verschieden große Hubintervalle handelt, die vorzugsweise abhängig von der aktuell eingestellten Arbeitshöhe unterteilt sind. Beispielsweise ist es so möglich, zunächst eine grobe Voreinstellung vorzunehmen und anschließend eine Feinjustage. Die Hubintervalle können jeweils in einem Bereich von 5 mm bis 20 mm sein, vorzugsweise in einem Bereich von 10 mm bis 13 mm. Bei einem Verstellweg von 100 Prozent kann ein Hubintervall in einem Bereich von 5 bis 20 Prozent sein, vorzugsweise 10 Prozent. Denkbar ist, dass der Verstellweg beim Einrichten und/oder beim Warten der Hubeinrichtung kalibriert wird, indem die Hubeinrichtung gegen zwei Endanschläge verfahren wird. Der zwischen den Endanschlägen zurückgelegte Verstellweg entspricht dann 100 Prozent. Der zurückgelegte Verstellweg kann beim Kalibrieren als Umdrehungen mittels eines Drehgebers erfasst werden, vorzugsweise bei einem Spindelantrieb. Abhängig von der Gewindesteigung der Spindel entspricht dann eine Umdrehung einem bestimmten Verfahrweg der Höhenverstelleinrichtung. Bei Hydraulikzylindern kann die Ölmenge gemessen und kalibriert werden, die dem maximalen Verstellweg entspricht.

Dass "eine Bedienperson zur Verstellung der Arbeitshöhe eine ganzzahlige Anzahl von Hubintervallen an einer Eingabeeinheit eingibt" kann hier bedeuten, dass die Bedienperson eine Taste, einen Hebel oder dergleichen an der Eingabeeinheit mehrfach entsprechend der Anzahl betätigt. Die "ganzzahlige Anzahl von Hubintervallen" kann ein relatives Maß sein, um das die Arbeitshöhe gegenüber der aktuellen Arbeitshöheneinstellung verstellt werden soll. Denkbar ist, dass zwei verschiedene Tasten betätigt werden, um entweder die Arbeitshöhe zu verringern oder zu vergrößern.

Dass die "Steuereinrichtung die Höhenverstelleinrichtung derart steuert, dass die Arbeitshöhe um die Anzahl der Hubintervalle automatisch verstellt wird" kann hier bedeuten, dass die Steuereinrichtung mittels eines Regel- oder Steuerungsverfahrens einen oder mehrere Antriebe der Höhenverstelleinrichtung automatisch ansteuert, bis eine Soll-Position erreicht ist, an der die eingestellte Arbeitshöhe angefahren ist.

Die Steuereinrichtung kann eine Maschinensteuerung sein, mit der die Höhenverstelleinrichtung, der Schwader und/oder das Zugfahrzeug gesteuert werden. Die Eingabeeinheit kann über die Steuereinrichtung mit der Höhenverstelleinrichtung verbunden sein. Denkbar ist auch, dass die Steuereinrichtung in der Eingabeeinheit integriert oder davon separat angeordnet ist. Beispielsweise kann die Steuereinrichtung in der Eingabeeinheit integriert sein und digitale Positionssignale zur Einstellung der Arbeitshöhe an die Höhenverstelleinrichtung senden. Die Regelung bzw. Steuerung der einzustellenden Arbeitshöhe erfolgt dann in der Höhenverstelleinrichtung oder in einer weiteren zwischengeschalteten Steuer- oder Regeleinheit. Die Eingabeeinheit, die Steuereinrichtung und die Höhenverstelleinrichtung können über Datenschnittstellen oder Signalleitung miteinander verbunden sein. Ebenso ist denkbar, dass die Steuereinrichtung mit der Höhenverstelleinrichtung über Hydraulikschläuche oder dergleichen verbunden ist.

Die Bedienperson kann die Anzahl von Hubintervallen an der Eingabeeinheit durch wiederholte, gleichartige Bewegungen an einem Tastelement eintasten. Dadurch kann die Bedienperson die Anzahl von Hubintervallen eingeben, ohne dass ein Feedback, beispielsweise mittels einer Anzeige oder dergleichen notwendig ist. Folglich kann sich die Bedienperson auch während der Eingabe auf die Lenkung des Zugfahrzeugs konzentrieren. Das Tastelement kann ein Knopf, Hebel, Schalter oder dergleichen sein.

Als Tastelement kann ein Joystick an der Eingabeeinheit verwendet werden. Dadurch können zwei unterschiedliche Informationen unabhängig voneinander mit einem Bedienelement in die Eingabeeinheit eingegeben werden. Beispielsweise ist es mit dem Joystick möglich, sowohl eine Vergrößerung und Verringerung der Arbeitshöhe als auch getrennte Einstellung der Arbeitshöhe für links- bzw. rechtsseitig angeordnete Schwadkreisel einzugeben. Der Joystick kann ein Hebel sein, der in wenigstens zwei getrennten Raumrichtungen verschoben oder geschwenkt werden kann und der die Bewegung in den zwei Raumrichtungen als getrennte Informationen erfasst. Beispielsweise kann der Joystick um zwei senkrecht aufeinander stehende Raumachsen geschenkt werden.

Der Joystick kann in wenigstens eine obere Taststellung zur Vergrößerung der Arbeitshöhe und in wenigstens eine dazu gegenüberliegende untere Taststellung zur Verringerung der Arbeitshöhe bewegt werden. Dadurch kann mit dem Joystick als einzelnes Bedienelement sowohl eine Vergrößerung als eine Verringerung der Arbeitshöhe eingegeben werden. Die obere Taststellung kann eine Stellung des Joysticks sein, die von der Bedienperson abgewandt ist. Ebenso kann die untere Taststellung eine Stellung des Joysticks sein, die der Bedienperson zugewandt ist. Ebenso können bei einer Draufsicht in einer Handhabungsposition der Eingabeeinheit die obere Taststellung oben und die untere Taststellung unten angeordnet sein.

Der Joystick kann in wenigstens eine diagonal linke Taststellung zur Verstellung einer linken Arbeitshöhe wenigstens eines linken Schwadkreisels und in wenigstens eine diagonal rechte Taststellung zur Verstellung einer rechten Arbeitshöhe wenigstens eines rechten Schwadkreisels bewegt werden. Dadurch ist es möglich, linke Schwadkreisel und rechte Schwadkreisel getrennt voneinander in der Arbeitshöhe zu verstellen. Mit linker bzw. rechter Schwadkreisel kann hier ein Schwadkreisel gemeint sein, der in Fahrtrichtung des Schwaders links bzw. rechts vom Tragrahmen angeordnet ist. Beispielsweise kann der Joystick in eine diagonal oben linke Taststellung bewegt werden, um die linke Arbeitshöhe zu vergrößern. Ebenso kann der Joystick in eine diagonal unten linke Taststellung bewegt werden, um die linke Arbeitshöhe zu verringern. Ebenso kann der Joystick in eine diagonal oben rechte Taststellung bewegt werden, um die rechte Arbeitshöhe zu vergrößern bzw. in eine diagonal unten rechte Taststellung, um die rechte Arbeitshöhe zu verringern. Dadurch ist es möglich, die Schwadkreisel rechts und links getrennt voneinander zu verstellen und jeweils die Arbeitshöhe zu vergrößern oder zu verringern.

Die Bedienperson kann die Anzahl der Hubintervalle durch entsprechend mehrfach wiederholte Bewegen des Joysticks in dieselbe Taststellung oder durch eine Bewegung des Joysticks zu einer gewählten Taststellung hin und wiederholtes Betätigen eines Tastelements am Joystick in der gewählten Taststellung eingeben. Dadurch ist es möglich, besonders einfach die Anzahl der Hubintervalle durch das wiederholte Betätigen des Joysticks in dieselbe Richtung oder durch die Betätigung des Tastelements am Joystick einzugeben. Die Bedienperson kann das Tastelement am Joystick wiederholt entsprechend der einzugebenden Anzahl von Hubintervallen betätigen. Das Tastelement kann am Hebel des Joysticks angeordnet und vorzugsweise als Taster oder Knopf ausgeführt sein. Denkbar ist auch, dass die Steuereinrichtung die Höhenverstelleinrichtung derart ansteuert, dass bei der Bewegung des Joysticks zur gewählten Taststellung hin bereits mit einer manuellen Verstellung der Arbeitshöhe begonnen wird. Erst wenn das Tastelement betätigt wird, übernimmt die Eingabeeinheit und die Steuerungseinrichtung die dadurch eingegebene Anzahl der Hubintervalle und verstellt die Arbeitshöhe anschließend automatisch weiter.

Denkbar ist auch, dass wenigstens ein virtuelles Tastelement an einer berührungsempfindlichen Anzeigeeinheit angezeigt wird und die Bedienperson die Anzahl von Hubintervallen durch wiederholte Berührung des virtuellen Tastelements eintastet. Dadurch kann eine bereits vorhandene, berührungsempfindliche Anzeigeeinheit zur Einstellung der Arbeitshöhe genutzt werden. Die berührungsempfindliche Anzeigeeinheit kann ein Touchscreen sein. Ein virtuelles Tastelement kann ein an der Anzeigeeinheit angezeigter Schalter, eine Tastfläche oder dergleichen sein. Die Tastfläche kann ein Logo, ein Icon oder ein Symbol für die gewünschte Verstellbewegung der Arbeitshöhe umfassen. Denkbar ist, dass sich das virtuelle Tastelement beim Berühren durch die Bedienperson grafisch verändert. Ebenso ist denkbar, dass bei der Berührung des virtuellen Tastelements ein akustischer Ton mittels eines Signalgebers ausgelöst wird. Dadurch erhält die Bedienperson eine Rückmeldung als optisches oder akustisches Signal. Das virtuelle Tastelement kann mehrfach berührt werden, um eine entsprechende Anzahl der Hubintervalle einzugeben. Wird beispielsweise das virtuelle Tastelement viermal hintereinander berührt, so bedeutet dies eine Verstellung der Arbeitshöhe um vier Hubintervalle. Denkbar ist auch, dass über weitere virtuelle Bedienelemente an der berührungsempfindlichen Anzeigeeinheit wenigstens eine aktuelle Arbeitshöhe gespeichert und später wieder abgerufen werden kann. Ebenso ist denkbar, dass über weitere virtuelle Bedienelemente wenigstens eine Arbeitshöhe für bestimmte Ernteguttypen oder Nutzflächentypen aus einer Datenbank abgerufen werden können. Basierend auf den abgerufenen Werten für die Arbeitshöhe kann dann die Steuereinrichtung die Höhenverstellung automatisch verstellen.

Durch halten der Tastfläche kann jederzeit auch einen stufenlose Verstellung vorgenommen werden. Es können auch alle Schwadkreisel gleichzeitig den gleichen Verfahrweg ausfahren oder einfahren.

Ein virtuelles Tastelement kann zur Vergrößerung der Arbeitshöhe und ein anderes virtuelles Tastelement kann zur Verringerung der Arbeitshöhe berührt werden. Dadurch kann die Arbeitshöhe besonders einfach vergrößert und verkleinert werden. Beide virtuellen Tastelements können mit unterschiedlichen Logos, Icons, Symbolen und dergleichen gekennzeichnet sein.

Ein linkes virtuelles Tastelement oder Tastelementepaar kann zur Verstellung einer linken Arbeitshöhe wenigstens eines linken Schwadkreisels und ein rechtes virtuelles Tastelement oder Tastelementepaar kann zur Verstellung einer rechten Arbeitshöhe wenigstens eines rechten Schwadkreisels berührt werden. Dadurch kann der Schwader besonders flexibel auf die landwirtschaftliche Nutzfläche eingestellt werden. Beispielsweise kann es sich um vier virtuelle Tastelemente handeln, die vorzugsweise in einer 2x2-Matrixanordnung an der berührungsempfindlichen Anzeigeeinheit angezeigt werden. Wird beispielsweise das linke, obere virtuelle Tastelement berührt, so wird der wenigstens eine linke Schwadkreisel angehoben. Entsprechend wird bei der Berührung eines linken unteren virtuellen Tastelements der linke Schwadkreisel abgesenkt. Ebenso wird bei der Berührung des rechten oberen virtuellen Tastelements der wenigstens eine rechte Schwadkreisel angehoben bzw. bei der Berührung des rechten unteren virtuellen Tastelements abgesenkt. Folglich können die Arbeitshöhe der rechten bzw. linken Schwadkreisels unabhängig voneinander besonders einfach eingestellt werden.

Darüber hinaus stellt die Erfindung zur Lösung der Aufgabenstellung ein Bediensystem mit den Merkmalen des Anspruchs 10 bereit. Vorteilhafte Ausführungsformen sind den Unteransprüchen genannt.

Dadurch, dass der Verstellweg der Höhenverstelleinrichtung in Hubintervallen unterteilt in der Steuereinrichtung abgelegt ist und zur Verstellung der Arbeitshöhe die ganzzahlige Anzahl von Hubintervallen an der Eingabeeinheit eingebbar ist, kann die Arbeitshöhe von der Bedienperson als besonders einfache Information in die Eingabeeinheit eingegeben werden. Da die Steuereinrichtung dazu ausgebildet ist, die Höhenverstelleinrichtung derart zu steuern, dass die Arbeitshöhe um die Anzahl der Hubintervalle automatisch verstellt wird, ist es nicht mehr notwendig, dass die Bedienperson einen Knopf bzw. Hebel betätigt hält, während die Höhenverstelleinrichtung die gewünschte Arbeitshöhe anfährt. Folglich ist die Arbeitshöhe mit dem Bediensystem besonders einfach einstellbar, ohne währenddessen die Bedienperson von der Lenkung des Zugfahrzeugs oder dergleichen abzulenken.

An der Eingabeeinheit kann ein Tastelement angeordnet sein, mit dem die Anzahl von Hubintervallen durch wiederholte, gleichartige Bewegungen anwählbar ist. Dadurch kann die Bedienperson die Anzahl von Hubintervallen eingeben, ohne dabei fortwährend die Eingabeeinheit und die Schwadkreisel im Blickfeld zu haben. Folglich wird sie beispielsweise vom Lenken des Zugfahrzeugs nicht abgelenkt und muss den Einstellvorgang nicht abzuwarten. Das Tastelement kann eine Taste, oder ein Hebel sein. Die Anzahl der wiederholten, gleichartigen Bewegungen kann die Anzahl der Intervalle sein, die die Bedienperson eingibt.

Das Tastelement kann ein Joystick sein, der in wenigstens eine obere Taststellung zur Vergrößerung der Arbeitshöhe und in wenigstens eine dazu gegenüberliegende, untere Taststellung zur Verringerung der Arbeitshöhe bewegbar ist. Dadurch ist es möglich, dass die Bedienperson sowohl eine Vergrößerung als auch eine Verringerung der Arbeitshöhe durch ein einziges Tastelement eingibt. Dadurch ist die Arbeitshöhe besonders einfach einstellbar. Der Joystick kann einen um wenigstens zwei Achsen schwenkbaren Hebel umfassen. Alternativ kann der Hebel in zwei Richtungen unabhängig voneinander verschiebbar sein.

Der Joystick kann in wenigstens eine diagonal linke Taststellung zur Verstellung einer linken Arbeitshöhe wenigstens eines linken Schwadkreisels und in wenigstens eine diagonal rechte Taststellung zur Verstellung einer rechten Arbeitshöhe wenigstens eines rechten Schwadkreisels bewegbar sein. Dadurch ist es möglich, den linken Schwadkreisels unabhängig vom rechten Schwadkreisel in der Arbeitshöhe zu verstellen. Der linke Schwadkreisel kann in Fahrtrichtung links bzw. der rechte Schwadkreisel in Fahrtrichtung rechts am Schwader angeordnet sein.

Die Eingabeeinheit kann eine berührungsempfindliche Anzeigeeinheit (Touchscreen) umfassen, an dem wenigstens ein virtuelles Tastelement zum Eintasten der Anzahl von Hubintervallen anzeigbar ist. Dadurch kann eine bereits vorhandene, berührungsempfindliche Anzeigeeinheit auch zur Einstellung der Arbeitshöhe des Schwaders verwendet werden. Zudem ist die berührungsempfindliche Anzeigeeinheit zur Verstellung der Arbeitshöhe besonders flexibel an unterschiedliche Schwadertypen anpassbar.

Darüber hinaus kann das Bediensystem zur Durchführung des Verfahrens nach einem der Ansprüche 1-9 ausgebildet sein. Ferner kann das Bediensystem die zuvor in Bezug auf das Verfahren zur Verstellung der Arbeitshöhe beschriebenen Merkmale sinngemäß einzelnen oder in beliebigen Kombinationen umfassen.

Weitere Merkmale und Vorteile der Erfindung werden nachfolgend anhand der in den Figuren dargestellten Ausführungsbeispiele näher erläutert. Dabei zeigt:
- Figur 1: einen Schwader mit Schwadkreiseln und mit einer Höhenverstelleinrichtung in einer perspektivischen Ansicht;
- Figur 2: ein Ausführungsbeispiel eines erfindungsgemäßen Verfahrens zur Verstellung der Arbeitshöhe von Schwadkreiseln eines Schwaders als Ablaufdiagramm;
- Figur 3A - 3B: ein Ausführungsbeispiel eines erfindungsgemäßen Bediensystems zur Verstellung der Arbeitshöhe von Schwadkreiseln eines Schwaders bzw. dessen Eingabeeinheit;
- Figur 4A - 4D: die Eingabeeinheit der Figur 3B bei der Eingabe der Anzahl von Hubintervallen;
- Figur 5: ein weiteres Ausführungsbeispiel einer zur Figur 3B alternativen Eingabeeinheit.

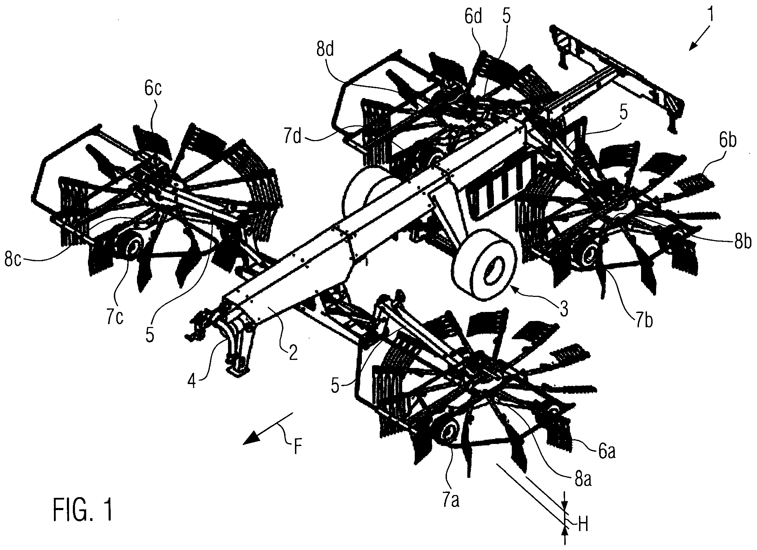

In der Figur 1 ist ein Schwader 1 mit Schwadkreiseln 6a-6d und mit einer Höhenverstelleinrichtung 8a-8d in einer perspektivischen Ansicht dargestellt. Der Schwader 1 ist hier nur beispielsweise mit vier Schwadkreiseln 6a - 6d gezeigt, kann jedoch auch nur einen, zwei, sechs oder noch mehr Schwadkreisel aufweisen.

Zu sehen ist der Tragrahmen 2, der über die Räder 3 auf der landwirtschaftlichen Nutzfläche abgestützt wird und der über die Anhängevorrichtung 4 mit einem hier nicht dargestellten Zugfahrzeug verbunden werden kann. Des Weiteren ist zu sehen, dass an dem Tragrahmen 2 über die verstellbaren Arme 5 die Schwadkreisel 6a-6d angeordnet sind, die sich hier in der Arbeitsstellung befinden. Die Schwadkreisel 6a-6d werden jeweils aus einem Kreiselkopf und mehren daran umfänglich angeordneten Zinkenarmen gebildet, von deren Enden jeweils mehrere Zinken zum Boden hin abstehen. Durch das Ziehen des Schwaders 1 mit dem Zugfahrzeug in Fahrtrichtung F wird das Erntegut zunächst mit den beiden vorderen Schwadkreiseln 6a, 6c zur Mitte hin und dann von den beiden hinteren Schwadkreiseln 6b, 6d zu einem Schwad zusammengerecht. Beim Transport oder in einem Vorgewende können die Schwadkreisel 6a - 6d mit den verstellbaren Armen 5 nach oben geschwenkt werden.

Zu sehen ist auch, dass die Schwadkreisel 6a-6d jeweils über die Führungsräder 7a-7d auf der landwirtschaftlichen Nutzfläche abgestützt werden. Um die Arbeitshöhe H einzustellen, sind die Führungsräder 7a-7d an den jeweiligen Schwadkreiseln 6a-6d über lineare Aktuatoren 8a-8d angeordnet, beispielsweise über Hydraulikzylinder, Spindel- oder Zahnstangenantriebe. Diese sind hydraulisch oder elektrisch in der Länge einstellbar, so dass die Führungsräder 7a-7d nach unten oder oben verfahren werden können. Dementsprechend kann so die Arbeitshöhe H jedes Schwadkreisels 6a-6d unabhängig voneinander eingestellt werden. Die linearen Aktuatoren 8a - 8d bilden zusammen die Höhenverstelleinrichtung. Denkbar sind auch andere bekannte Höhenverstelleinrichtungen für die Schwadkreisel 6a - 6d.

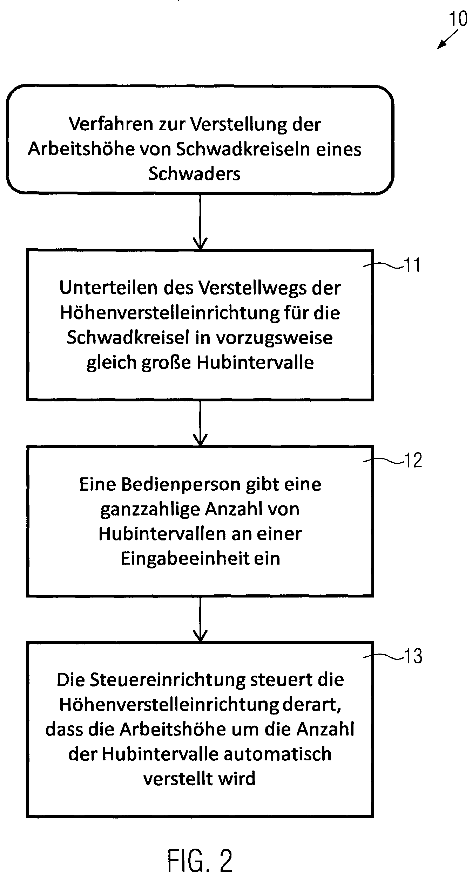

In der Figur 2 ist ein Ausführungsbeispiel eines erfindungsgemäßen Verfahrens 10 zur Verstellung der Arbeitshöhe von Schwadkreiseln eines Schwaders als Ablaufdiagramm dargestellt.

Zunächst wird in Schritt 11 der Verstellweg der Höhenverstelleinrichtung für die Schwadkreisel in vorzugsweise gleich große Hubintervalle unterteilt. Beispielsweise sind die Führungsräder 7a-7d in der Figur 1 über die linearen Aktuatoren 8a-8d jeweils um einen Gesamtverstellweg von 100 mm entsprechend 100 Prozent verfahrbar. Folglich kann der Verstellweg beispielsweise in 10 gleich große Hubintervalle von jeweils 10 mm entsprechend 10 Prozent unterteilt in einer Steuereinrichtung abgelegt werden. Denkbar ist jedoch auch jede andere sinnvolle Größe des Verstellwegs und/oder Unterteilung des Verstellwegs als Hubintervalle.

Anschließend gibt eine Bedienperson in Schritt 12 eine ganzzahlige Anzahl von Hubintervallen an einer Eingabeeinheit ein. Denkbar ist, dass dies durch wiederholte, gleichartige Bewegungen an einem Tastelement geschieht. Beispielsweise wird dazu ein Joystick mehrfach in dieselbe Richtung zu einer bestimmten Taststellung hin bewegt. Die Anzahl der wiederholten, gleichartigen Bewegung entspricht dann der Anzahl von Hubintervallen. Denkbar ist auch, dass an einer berührungsempfindlichen Anzeigeeinheit ein virtuelles Tastelement angezeigt wird, das die Bedienperson wiederholt berührt. Die Anzahl der Wiederholungen entspricht dann der Anzahl von Hubintervallen. Denkbar ist auch, dass ein Taster, Hebel, Schalter oder dergleichen wiederholt betätigt wird, um die Anzahl der Hubintervalle einzutasten.

Anschließend steuert eine Steuereinrichtung im Schritt 13 die Höhenverstelleinrichtung derart, beispielsweise des Schwaders aus der Figur 1, dass die Arbeitshöhe um die Anzahl der Hubintervalle automatisch verstellt wird. Währenddessen ist es also nicht mehr notwendig, dass die Bedienperson abwartet und die Eingabeeinheit beobachtet oder betätigt. Folglich werden die Schwadkreisel 6a-6d in der Figur 1 so lange ab der aktuell eingestellten Arbeitshöhe um die Anzahl der eingegebenen Hubintervalle verfahren, bis die so gewünschte Arbeitshöhe angefahren ist.

Da die Bedienperson lediglich die ganzzahlige Anzahl von Hubintervallen in die Eingabeeinheit eingibt, kann sie besonders einfach die gewünschte Arbeitshöhe wählen. Darüber hinaus braucht sie die Schwadkreisel nach der Eingabe nicht mehr im Auge zu behalten. Dadurch kann sich die Bedienperson auf andere Tätigkeiten, wie beispielsweise die Lenkung des Zugfahrzeugs konzentrieren.

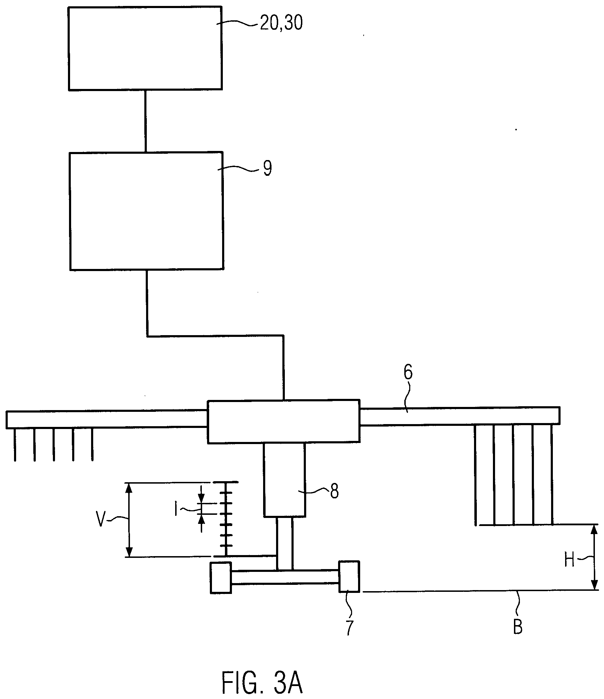

In den Figuren 3A-3B ist ein Ausführungsbeispiel eines erfindungsgemäßen Bediensystems zur Verstellung der Arbeitshöhe H von Schwadkreiseln 6 eines Schwaders in einer seitlichen Ansicht bzw. in einer Draufsicht auf die Eingabeeinheit 20 gezeigt. Das Bediensystem ist hier beispielhaft für einen Schwader mit einem linken und einem rechten Schwadkreisel ausgeführt (Zweikreiselschwader). Die Ausführungsform des Schwadkreisels 6, der Höhenverstelleinrichtung 8 sowie der Führungsräder 7 in der Figur 3A gelten gleichermaßen für den rechten und linken Schwadkreisel des Schwaders. Das Bediensystem der Fig. 3A - 3B kann jedoch auch für einen Schwader mit einem, vier, sechs oder noch mehr Schwadkreiseln eingesetzt werden.

Zu sehen ist in der Figur 3A, dass der Schwadkreisel 6 über die Höhenverstelleinrichtung 8 und die Führungsräder 7 auf der landwirtschaftlichen Nutzfläche B abgestützt wird. Die linearen Aktuatoren der Höhenverstelleinrichtung 8 sind hier beispielsweise Spindelantriebe, die elektrisch von der Steuereinrichtung 9 ansteuerbar sind. Denkbar sind jedoch auch jegliche andere geeignete Aktuatoren bzw. Antriebe, um die Arbeitshöhe H einzustellen.

Zu sehen ist auch der Verstellweg V der Höhenverstelleinrichtung 8, innerhalb der die Arbeitshöhe H maximal einstellbar ist. Beispielsweise beträgt der maximale Verstellweg der Höhenverstelleinrichtung 8 100mm, was einem Verstellweg V von 100 Prozent entspricht. Der Verstellweg V ist in vorzugsweise gleich große Hubintervalle I von jeweils 10 Prozent unterteilt und in der Steuereinrichtung 9 abgelegt.

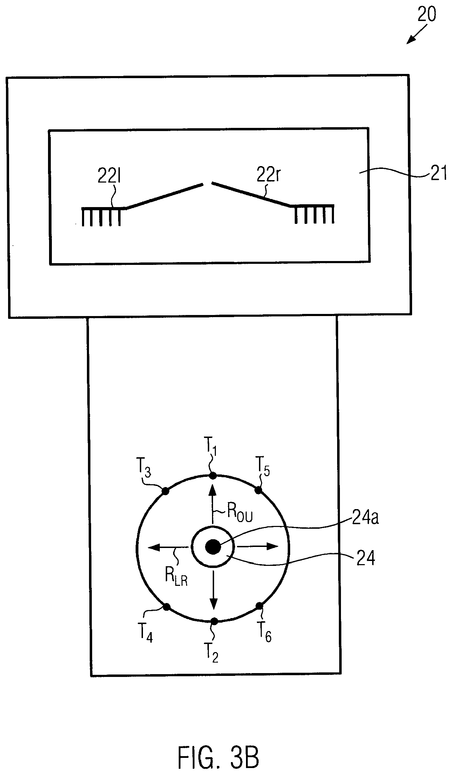

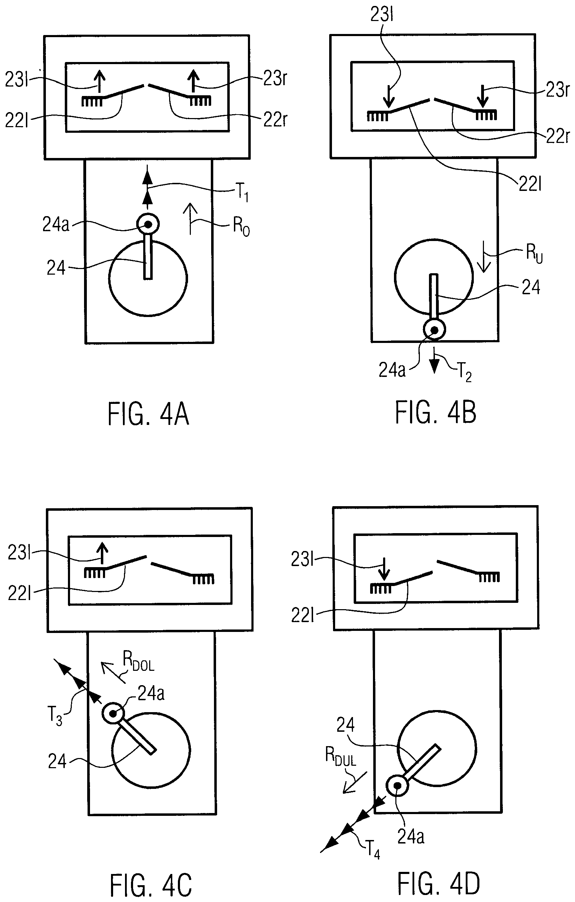

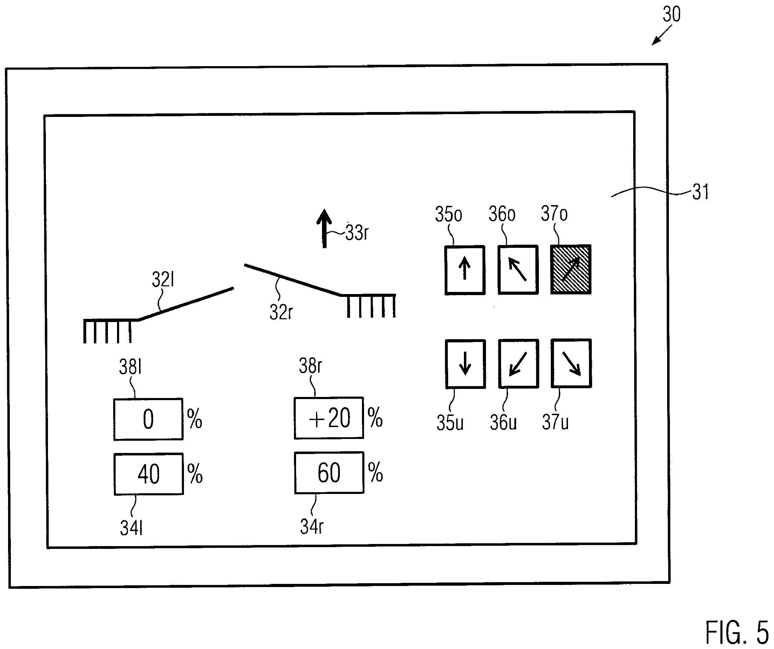

Darüber hinaus ist zu sehen, dass die ganzzahlige Anzahl von Hubintervallen I zur Verstellung der Arbeitshöhe H an der Eingabeeinheit 20 (Figur 3B, 4A - 4D) bzw. alternativ der Eingabeeinheit 30 (Figur 5) eingebbar ist. Dies wird im Einzelnen weiter unten anhand der Figuren 3B, 4A-4D bzw. der Figur 5 näher erläutert.

Des Weiteren ist die Steuereinrichtung 9 dazu ausgebildet, die Höhenverstelleinrichtung 8 derart zu steuern, dass die Arbeitshöhe H um die Anzahl der Hubintervalle automatisch verstellbar ist. Anders ausgedrückt wird die Arbeitshöhe H ab der aktuell eingestellten Arbeitshöhe auf die gewünschte Arbeitshöhe verstellt.

In der Figur 3B ist ein Ausführungsbeispiel einer Eingabeeinheit 20 in einer Draufsicht gezeigt. Zu sehen ist eine Anzeigeeinheit 21, auf der als Symbole 22l, 22r der linke und rechte Schwadkreisel 6 des Zweikreiselschwaders angezeigt werden. Die Funktion der Anzeigeeinheit 21 wird weiter unten anhand der Figuren 4A-4D näher erläutert.

Des Weiteren ist der Joystick 24 zu sehen, der sowohl in die Richtung R_{OU} nach oben und unten und in die Richtung R_{LR} nach links und rechts und in beliebige Diagonalrichtungen schwenkbar ist. Dadurch kann der Joystick nach oben in die obere Taststellung T₁, nach unten in die untere Taststellung T₂ bewegt werden, um die Arbeitshöhe H zu vergrößern bzw. zu verringern.

Des Weiteren kann der Joystick in eine diagonal oben linke Taststellung T₃ bzw. in eine diagonal unten linke Taststellung T₄ bewegt werden, um eine linke Arbeitshöhe zu verstellen. Dadurch wird der linke Schwadkreisel 6 angehoben bzw. abgesenkt. Ebenso kann der Joystick 24 in die diagonal oben rechte Taststellung T₅ und die diagonal unten rechte Taststellung T₆ bewegt werden, um eine rechte Arbeitshöhe zu verstellen. Dadurch wird der rechte Schwadkreisel 6 angehoben bzw. abgesenkt.

Zudem ist das Tastelement 24a zu sehen, mit der nach dem Bewegen in eine der Taststellungen T₁-T₆ die Anzahl der Hubintervalle I eingetastet werden kann. Die Bedienperson bewegt also den Joystick 24 in eine der Taststellungen T₁-T₆ und betätigt dann das Tastelement 24a einmal oder mehrmals entsprechend der Anzahl der gewünschten Hubintervalle I.

Alternativ ist es denkbar, dass die Bedienperson den Joystick 24 jeweils wiederholt in ein der Taststellungen T₁-T₆ bewegt, um die Anzahl der Hubintervalle einzugeben.

Die Bedienung des Joysticks 24 wird nachfolgend anhand der Figuren 4A-4D näher erläutert:
In der Figur 4A ist die Eingabeeinheit 20 der Figur 3B beim Vergrößern der Arbeitshöhe der Schwadkreisel 6 gezeigt. Zu sehen ist, dass der Joystick 24 in der Richtung R_{O} nach oben bewegt und in dieser Stellung das Tastelement 24a zweimal betätigt wird. Dies wird durch den Doppelpfeil an der oberen Taststellung T₁ symbolisiert. Dadurch werden beide Schwadkreisel 6 um zwei Hubintervalle angehoben. Sind in der Steuereinrichtung 9 der Figur 3A Hubintervalle von 10 Prozent hinterlegt, so werden folglich beide Schwadkreisel 6 um 20 Prozent (bei diesem Beispiel entspricht das 20 mm) angehoben. Dies wird in der Anzeigeeinheit 21 entsprechend durch die nach oben verschobenen Symbole 22l, 22r und die nach oben gerichteten Pfeile 23l, 23r angezeigt. Denkbar ist auch, dass zudem die eingestellte Veränderung der Arbeitshöhe und/oder eine absolute Arbeitshöhe in der Anzeigeeinheit 21 angezeigt werden.

In der Figur 4B zu sehen, dass der Joystick 24 in der Richtung R_{U} nach unten bewegt und dort das Tastelement 24a einmal betätigt wird. Dies wird durch den einfachen Pfeil an der unteren Taststellung T₂ symbolisiert. Dadurch werden beim Schwader die Arbeitshöhen H beider Schwadkreisel 6 um ein Hubintervall, also 10 Prozent verringert. Dies wird in der Anzeigeeinheit 21 entsprechend durch die nach unten verschobenen Symbole 22l, 22r und die nach unten gerichteten Pfeile 23l, 23r angezeigt.

Des Weiteren wird in der Figur 4C gezeigt, dass lediglich eine linke Arbeitshöhe vom linken Schwadkreisel erhöht wird: Dazu bewegt die Bedienperson den Joystick 24 entlang der Richtung R_{DOL} in die diagonal oben linke Taststellung T₃ und betätigt dort das Tastelement 24a dreimal, was hier durch einen dreifachen Pfeil angedeutet wird. Dadurch wird die Höhenverstelleinrichtung 8 von der Steuereinrichtung 9 derart gesteuert, dass sich die linke Arbeitshöhe H des linken Schwadkreisel 6 um 30 Prozent vergrößert. Die Arbeitshöhe der rechten Schwadkreisel 6 bleibt dagegen gleich.

In der Figur 4D ist gezeigt, dass der Joystick 24 von der Bedienperson in Richtung R_{DUL} in die diagonal unten linke Taststellung T₄ bewegt und dort das Tastelement 24a viermal betätigt wird. Dementsprechend wird die Arbeitshöhe H des linken Schwadkreisels 6 um vier Hubintervalle, also 40 Prozent verringert. Dies wird durch eine Verschiebung des Symbols 22l in der Anzeige 21 nach unten sowie den nach unten gerichteten Pfeil 23l angezeigt.

Denkbar ist jedoch auch jede andere Wahl der Hubintervalle. Wäre ein Hubintervall beispielsweise 20 Prozent, so würde bei zweimaliger Betätigung des Tastelements 24a am Joystick 24 eine Veränderung der Arbeitshöhe um 40 Prozent eingestellt werden.

Entsprechend der Figuren 4C, 4D kann der Joystick 24 auch in die diagonal oben rechte Taststellung T₅ bzw. diagonal unten rechte Taststellung T₆ bewegt werden, um eine rechte Arbeitshöhe für den rechten Schwadkreisel 6 zu verstellen.

Durch den Joystick 24 ist es also möglich, die Arbeitshöhen des linken und rechten Schwadkreisels 6besonders einfach und flexibel einzustellen.

In der Figur 5 ist ein weiteres Ausführungsbeispiel einer alternativen Eingabeeinheit 30 in einer Draufsicht dargestellt. Diese kann bei der Figur 3A alternativ als Eingabeeinheit 30 eingesetzt werden, um den Schwader mit zwei Schwadkreiseln zu bedienen. Auch hier ist denkbar, dass die Eingabeeinheit 30 bei einem Schwader mit einem, vier, sechs oder noch mehr Schwadkreiseln verwendet wird.

Zu sehen ist, dass die Eingabeeinheit 30 die berührungsempfindliche Anzeigeeinheit 31 umfasst, auf der die virtuellen Tastelemente 35o, 35u, 36o, 36u, 37o und 37u angezeigt werden. Des Weiteren ist zu sehen, dass der linke Schwadkreisel durch das Symbol 32l bzw. der rechte Schwadkreisel durch das Symbol 32r repräsentiert werden. Darüber hinaus wird ein Pfeil 33r angezeigt, der eine Bewegung des rechten Schwadkreisels nach oben, also eine Vergrößerung der rechten Arbeitshöhe H anzeigt. Weiterhin ist zu sehen, dass auf der berührungsempfindlichen Anzeigeeinheit 31 die Anzeigeelemente 34l, 34r die gerade eingestellten Ist-Arbeitshöhen H des linken bzw. rechten Schwadkreisels in Prozent des Verstellwegs V anzeigen. Darüber hinaus wird die gerade eingegebene Anzahl von Hubintervallen in Prozent für den linken bzw. rechten Schwadkreisel getrennt in zwei weiteren Anzeigeelementen 38l, 38r angezeigt.

Mit dem ersten virtuellen Tastelementepaar 35o, 35u ist es möglich, die Arbeitshöhe beider Schwadkreisel zu erhöhen bzw. zu verringern. Des Weiterenn kann mit dem zweiten virtuellen Tastelementepaar 36o, 36u lediglich die linke Arbeitshöhe des linken Schwadkreisels bzw. mit dem dritten virtuellen Tastelementepaar 37o, 37u lediglich die rechte Arbeitshöhe des rechten Schwadkreisels unabhängig voneinander eingestellt werden.

Zu sehen ist weiter als Beispiel, dass die Bedienperson gerade das virtuelle Tastelement 37o zweimal berührt hat. Dementsprechend wird die rechte Arbeitshöhe bei einem Hubintervall von 10% so verstellt, dass der rechte Schwadkreisel 6 um 20% angehoben wird. Dies wird im Anzeigeelement 38r entsprechend angezeigt. Ausgehend von der bisherigen Arbeitshöhe H von 40 Prozent wird nun der rechte Schwadkreisel auf eine Arbeitshöhe von 60 Prozent angehoben. Ist die Arbeitshöhe von 60 Prozent erreicht, so wird sie im Anzeigeelement 34r angezeigt. Darüber hinaus wird das Symbol 32r etwas nach oben verschoben und der nach oben gerichtete Pfeil 33r angezeigt, um der Bedienperson eine Rückmeldung zu geben. Folglich kann die Bedienperson also durch mehrfache Berührung eines virtuellen Tastelements 35o, 35u, 36o, 36u, 37o, 37u die Anzahl der Hubintervalle in die Eingabeeinheit 30 eingeben.

Denkbar ist auch, dass über weitere virtuelle Bedienelemente an der berührungsempfindlichen Anzeigeeinheit 31 eine aktuelle Arbeitshöhe gespeichert und später wieder abgerufen werden kann. Ebenso ist denkbar, dass über weitere virtuelle Bedienelemente typische Arbeitshöhen für bestimmte Ernteguttypen oder Nutzflächentypen aus einer Datenbank abgerufen werden können. Basierend auf den abgerufenen Werten für die Arbeitshöhe kann dann die Steuereinrichtung 9 die Höhenverstellung 8 automatisch verstellen.

Dadurch, dass in den vorangegangenen Ausführungsbeispielen der Verstellweg V in vorzugsweise gleich große Hubintervalle I unterteilt in der Steuereinrichtung 9 abgelegt ist und von einer Bedienperson eine ganzzahlige Anzahl von Hubintervallen I zur Verstellung der Arbeitshöhe H an der Eingabeeinheit 20, 30 eingebbar ist, kann die Bedienperson durch einfach wiederholbare Bewegungen die gewünschte Verstellung der Arbeitshöhe H eingeben. Folglich müssen nicht verschiedene Tasten oder dergleichen gedrückt werden und die Bedienperson kann sich beispielsweise weiter auf die Lenkung des Fahrzeugs konzentrieren. Da zudem die Steuereinrichtung 9 dazu ausgebildet ist, die Höhenverstelleinrichtung 8 derart zu steuern, dass die Arbeitshöhe H um die Anzahl der Hubintervalle I automatisch verstellbar ist, kann die Bedienperson während der automatischen Verstellung das Zugfahrzeug weiter lenken bzw. andere Tätigkeiten durchführen. Folglich ist also die Verstellung der Arbeitshöhe besonders einfach, zeitsparend und ohne Ablenkung der Bedienperson.

## Patentansprüche

1. Verfahren zur Verstellung der Arbeitshöhe (H) von Schwadkreiseln (6a - 6d) eines Schwaders (1), wobei die Schwadkreisel (6a - 6d) jeweils einzeln, gruppenweise oder gemeinsam bei der Einstellung der Arbeitshöhe (H) gegenüber einer landwirtschaftlichen Nutzfläche (B) entlang eines Verstellwegs (V) mit einer Höhenverstelleinrichtung (8a - 8b) verstellt werden,
**dadurch gekennzeichnet, dass**
der Verstellweg (V) in vorzugsweise gleich große Hubintervalle (I) unterteilt in einer Steuereinrichtung (9) abgelegt ist (11),
dass eine Bedienperson zur Verstellung der Arbeitshöhe (H) eine ganzzahlige Anzahl von Hubintervallen (I) an einer Eingabeeinheit (20, 30) eingibt (12), und
dass dann die Steuereinrichtung (9) die Höhenverstelleinrichtung (8a - 8d) derart steuert, dass die Arbeitshöhe (H) um die Anzahl der Hubintervalle (I) automatisch verstellt wird (13).

2. Verfahren nach Anspruch 1, wobei die Bedienperson die Anzahl von Hubintervallen (I) an der Eingabeeinheit (20, 30) durch wiederholte, gleichartige Bewegungen an einem Tastelement (24, 35o, 35u, 36o, 36u, 37o, 37u) eintastet.

3. Verfahren nach Anspruch 2, wobei als Tastelement ein Joystick (24) an der Eingabeeinheit (20) betätigt wird.

4. Verfahren nach Anspruch 3, wobei der Joystick (24) in wenigstens eine obere Taststellung (T₁) zur Vergrößerung der Arbeitshöhe (H) und in wenigstens eine dazu gegenüberliegende untere Taststellung (T₂) zur Verringerung der Arbeitshöhe (H) bewegt wird.

5. Verfahren nach Anspruch 3 oder 4, wobei der Joystick (24) in wenigstens eine diagonal linke Taststellung (T₃, T₄) zur Verstellung einer linken Arbeitshöhe wenigstens eines linken Schwadkreisels (6a, 6b) und in wenigstens eine diagonal rechte Taststellung (T₅, T₆) zur Verstellung einer rechten Arbeitshöhe wenigstens eines rechten Schwadkreisels (6c, 6d) bewegt wird.

6. Verfahren nach einem der Ansprüche 3 - 5, wobei die Bedienperson die Anzahl der Hubintervalle (I) durch entsprechend mehrfaches Betätigen des Joysticks (24) in dieselbe Taststellung (T₁ - T₆) oder durch eine Bewegung des Joysticks (24) zu einer gewählten Taststellung (T₁ - T₆) hin und wiederholtes Betätigen eines Tastelements (24a) am Joystick (24) in der gewählten Taststellung (T₁ - T₆) eingibt.

7. Verfahren nach Anspruch 1, wobei wenigstens ein virtuelles Tastelement (35o, 35u, 36o, 36u, 37o, 37u) an einer berührungsempfindlichen Anzeigeeinheit (31) angezeigt wird und die Bedienperson die Anzahl von Hubintervallen (I) durch wiederholte Berührung des virtuellen Tastelements (35o, 35u, 36o, 36u, 37o, 37u) eintastet.

8. Verfahren nach Anspruch 7, wobei ein virtuelles Tastelement (35o, 36o, 37o) zur Vergrößerung der Arbeitshöhe (H) und ein anderes virtuelles Tastelement (35u, 36u, 37u) zur Verringerung der Arbeitshöhe (H) berührt werden.

9. Verfahren nach Anspruch 7 oder 8, wobei ein linkes virtuelles Tastelement oder Tastelementepaar (36o, 36u) zur Verstellung einer linken Arbeitshöhe wenigstens eines linken Schwadkreisels (6a, 6b) und ein rechtes virtuelles Tastelement oder Tastelementepaar (37o, 37u) zur Verstellung einer rechten Arbeitshöhe wenigstens eines rechten Schwadkreisels (6c, 6d) berührt werden.

10. System umfassend
einen Schwader (1) mit Schwadkreiseln (6a - 6d), und mit einer Höhenverstelleinrichtung (8a - 8d), um die Schwadkreisel (6a - 6d) jeweils einzeln, gruppenweise oder gemeinsam entlang eines Verstellwegs in der Arbeitshöhe (H) gegenüber einer landwirtschaftlichen Nutzfläche (B) einzustellen;
und ein Bediensystem zur Verstellung der Arbeitshöhe der Schwadkreisel (6a - 6d), mit einer Eingabeeinheit (20, 30) zur Eingabe der Arbeitshöhe (H), und mit einer Steuereinrichtung (9) zur Steuerung der Höhenverstelleinrichtung (8a - 8d),
**dadurch gekennzeichnet, dass**
der Verstellweg in vorzugsweise gleich große Hubintervalle (I) unterteilt in der Steuereinrichtung (9) abgelegt ist,
dass eine ganzzahlige Anzahl von Hubintervallen (I) zur Verstellung der Arbeitshöhe (H) an der Eingabeeinheit (20, 30) eingebbar ist, und
dass die Steuereinrichtung (9) dazu ausgebildet ist, die Höhenverstelleinrichtung (8a - 8d) derart zur steuern, dass die Arbeitshöhe (H) um die Anzahl der Hubintervalle (I) automatisch verstellbar ist.

11. System nach Anspruch 10, an der Eingabeeinheit (20, 30) ein Tastelement (24, 35o, 35u, 36o, 36u, 37o, 37u) angeordnet ist, mit dem die Anzahl von Hubintervallen (I) durch wiederholte, gleichartige Bewegungen anwählbar ist.

12. System nach Anspruch 11, wobei das Tastelement ein Joystick (24) ist, der in wenigstens eine obere Taststellung (T₁) zur Vergrößerung der Arbeitshöhe (H) und in wenigstens eine dazu gegenüberliegende, untere Taststellung (T₂) zur Verringerung der Arbeitshöhe (H) bewegbar ist.

13. System nach Anspruch 11 oder 12, wobei der Joystick (24) in wenigstens eine diagonal linke Taststellung (T₃) zur Verstellung einer linken Arbeitshöhe wenigstens eines linken Schwadkreisels (6a, 6b) und in wenigstens eine diagonal rechte Taststellung zur Verstellung einer rechten Arbeitshöhe wenigstens eines rechten Schwadkreisels (6c, 6d) bewegbar ist.

14. System nach Anspruch 10, wobei die Eingabeeinheit (20, 30) eine berührungsempfindliche Anzeigeeinheit (31) umfasst, an dem wenigstens ein virtuelles Tastelement (35o, 35u, 36o, 36u, 37o, 37u) zum Eintasten der Anzahl von Hubintervallen (I) anzeigbar ist.

## Claims

1. Method for adjusting the working height (H) of spinners (6a - 6d) of a rake (1), wherein the spinners (6a - 6d) are each adjusted individually, in groups or jointly during the adjustment of the working height (H) relative to an agricultural useful area (B) along an adjustment path (V) by means of a height adjusting device (8a - 8b),
**characterized in that**
the adjustment path (V) is stored (11) in a control device (9) divided into preferably equal lifting intervals (I),
that an operator enters (12) an integer number of lifting intervals (I) at an input unit (20, 30) for adjusting the working height (H), and
that the control device (9) then controls the height adjusting device (8a - 8d) in such a way that the working height (H) is automatically adjusted (13) by the number of lifting intervals (I).

2. Method according to claim 1, wherein the operator keys in the number of lifting intervals (I) at the input unit (20, 30) by repeated similar movements at a key element (24, 35o, 35u, 36o, 36u, 37o, 37u).

3. Method according to claim 2, wherein a joystick (24) on the input unit (20) is operated as the key element.

4. Method according to claim 3, wherein the joystick (24) is moved into at least one upper key position (T₁) for increasing the working height (H) and into at least one lower key position (T₂) opposite thereto for decreasing the working height (H).

5. Method according to claim 3 or 4, wherein the joystick (24) is moved into at least one diagonally left key position (T₃, T₄) for adjusting a left working height of at least one left spinner (6a, 6b) and into at least one diagonally right key position (T₅, T₆) for adjusting a right working height of at least one right spinner (6c, 6d).

6. Method according to one of claims 3 - 5, wherein the operator enters the number of lifting intervals (I) by correspondingly operating the joystick (24) several times into the same key position (T₁ - T₆) or by moving the joystick (24) towards a selected key position (T₁ - T₆) and repeatedly operating a key element (24a) on the joystick (24) in the selected key position (T₁ - T₆).

7. Method according to claim 1, wherein at least one virtual key element (35o, 35u, 36o, 36u, 37o, 37u) is displayed on a touch-sensitive display unit (31) and the operator keys in the number of lifting intervals (I) by repeatedly touching the virtual key element (35o, 35u, 36o, 36u, 37o, 37u).

8. Method according to claim 7, wherein one virtual key element (35o, 36o, 37o) for increasing the working height (H) and another virtual key element (35u, 36u, 37u) for decreasing the working height (H) are touched.

9. Method according to claim 7 or 8, wherein a left virtual key element or key element pair (36o, 36u) for adjusting a left working height of at least one left spinner (6a, 6b) and a right virtual key element or key element pair (37o, 37u) for adjusting a right working height of at least one right spinner (6c, 6d) are touched.

10. System comprising
a rake (1) with spinners (6a - 6d), and having a height adjusting device (8a - 8d) in order to adjust the spinners (6a - 6d) each individually, in groups or jointly along an adjustment path at the working height (H) relative to an agricultural useful area (B);
and an operating system for adjusting the working height of the spinners (6a - 6d), having an input unit (20, 30) for inputting the working height (H), and having a control device (9) for controlling the height adjusting device (8a - 8d),
**characterized in that**
the adjustment path is stored in the control device (9) divided into preferably equal lifting intervals (I),
that an integer number of lifting intervals (I) for adjusting the working height (H) can be entered at the input unit (20, 30), and
that the control device (9) is designed to control the height adjusting device (8a - 8d) in such a way that the working height (H) is automatically adjustable by the number of lifting intervals (I).

11. System according to claim 10, wherein a key element (24, 35o, 35u, 36o, 36u, 37o, 37u) is arranged on the input unit (20, 30), by means of which the number of lifting intervals (I) can be selected by repeated similar movements.

12. System according to claim 11, wherein the key element is a joystick (24) which is movable into at least one upper key position (T₁) for increasing the working height (H) and into at least one lower key position (T₂) opposite thereto for decreasing the working height (H).

13. System according to claim 11 or 12, wherein the joystick (24) is movable into at least one diagonally left key position (T₃) for adjusting a left working height of at least one left spinner (6a, 6b) and into at least one diagonally right key position for adjusting a right working height of at least one right spinner (6c, 6d).

14. System according to claim 10, wherein the input unit (20, 30) comprises a touch-sensitive display unit (31) on which at least one virtual key element (35o, 35u, 36o, 36u, 37o, 37u) for keying in the number of lifting intervals (I) can be displayed.

## Revendications

1. Procédé destiné à régler la hauteur de travail (H) de toupies d'andaineuse (6a-6d) d'une andaineuse (1), les toupies d'andaineuse (6a-6d) étant réglées respectivement de manière individuelle, par groupes ou bien en commun, lors du réglage de la hauteur de travail (H) par rapport à une surface agricole utile (B), le long d'une course de réglage (V), à l'aide d'un dispositif de réglage en hauteur (8a-8d),
**caractérisé**
**en ce que** la course de réglage (V) est mémorisée (11) dans un dispositif de commande (9) en étant subdivisée en des intervalles de déplacement de réglage (I) de préférence de même grandeur,
**en ce qu'**une personne de service, pour régler la hauteur de travail (H), saisit (12) un nombre entier d'intervalles de déplacement de réglage (I) sur un terminal de saisie (20, 30), et
**en ce que** le dispositif de commande (9) commande alors le dispositif de réglage en hauteur (8a-8d) de manière telle, que la hauteur de travail (H) soit réglée automatiquement (13) de la valeur correspondant au nombre d'intervalles de déplacement de réglage (I).

2. Procédé selon la revendication 1, d'après lequel la personne de service saisit le nombre d'intervalles de déplacement de réglage (I) sur le terminal de saisie (20, 30), par des mouvements de même type répétés sur un élément tactile (24, 35o, 35u, 36o, 36u, 37o, 37u).

3. Procédé selon la revendication 2, d'après lequel en guise d'élément tactile, on actionne un joystick (24) sur le terminal de saisie (20).

4. Procédé selon la revendication 3, d'après lequel le joystick (24) est déplacé dans au moins une position tactile supérieure (T1) pour augmenter la hauteur de travail (H), et dans au moins une position tactile inférieure (T₂) opposée à la précédente, pour diminuer la hauteur de travail (H).

5. Procédé selon la revendication 3 ou la revendication 4, d'après lequel le joystick (24) est déplacé dans au moins une position tactile diagonale gauche (T₃, T₄) pour régler une hauteur de travail gauche d'au moins une toupie d'andaineuse gauche (6a, 6b), et dans au moins une position tactile diagonale droite (T₅, T₆) pour régler une hauteur de travail droite d'au moins une toupie d'andaineuse droite (6c, 6d).

6. Procédé selon l'une des revendications 3 - 5, d'après lequel la personne de service saisit le nombre des intervalles de déplacement de réglage (I) par un actionnement multiple correspondant du joystick (24) dans la même position tactile (T₁ - T₆), ou bien par un déplacement du joystick (24) vers une position tactile sélectionnée (T₁ - T₆) et actionnement répété d'un élément tactile (24a) sur le joystick (24) dans la position tactile sélectionnée (T₁ - T₆).

7. Procédé selon la revendication 1, d'après lequel au moins un élément tactile virtuel (35o, 35u, 36o, 36u, 37o, 37u) est affiché sur une unité d'affichage (31) sensible à l'effleurement, et la personne de service saisit le nombre des intervalles de déplacement de réglage (I), par effleurement répété de l'élément tactile virtuel (35o, 35u, 36o, 36u, 37o, 37u).

8. Procédé selon la revendication 7, d'après lequel on effleure un élément tactile virtuel (35o, 36o, 37o) pour augmenter la hauteur de travail (H), et un autre élément tactile virtuel (35u, 36u, 37u) pour diminuer la hauteur de travail (H).

9. Procédé selon la revendication 7 ou la revendication 8, d'après lequel on effleure un élément tactile virtuel gauche ou une paire d'éléments tactiles virtuels gauche (36o, 36u) pour le réglage d'une hauteur de travail gauche d'au moins une toupie d'andaineuse gauche (6a, 6b), et un élément tactile virtuel droit ou une paire d'éléments tactiles virtuels droit (37o, 37u) pour le réglage d'une hauteur de travail droite d'au moins une toupie d'andaineuse droite (6c, 6d).

10. Système comprenant
une andaineuse (1) avec des toupies d'andaineuse (6a-6d), et avec un dispositif de réglage en hauteur (8a-8d) pour régler les toupies d'andaineuse (6a-6d) respectivement de manière individuelle, par groupes ou bien en commun, quant à leur hauteur de travail (H) par rapport à une surface agricole utile (B), le long d'une course de réglage (V) ;
et un système de commande de service pour régler la hauteur de travail des toupies d'andaineuse (6a-6d), avec un terminal de saisie (20, 30) pour la saisie de la hauteur de travail (H), et avec un dispositif de commande (9) pour commander le dispositif de réglage en hauteur (8a-8d),
**caractérisé**
**en ce que** la course de réglage est mémorisée dans le dispositif de commande (9) en étant subdivisée en des intervalles de déplacement de réglage (I) de préférence de même grandeur,
**en ce que** pour régler la hauteur de travail (H), il est possible de saisir un nombre entier d'intervalles de déplacement de réglage (I) sur le terminal de saisie (20, 30), et
**en ce que** le dispositif de commande (9) est conçu pour commander le dispositif de réglage en hauteur (8a-8d) de manière telle que la hauteur de travail (H) soit réglée automatiquement de la valeur correspondant au nombre d'intervalles de déplacement de réglage (I).

11. Système selon la revendication 10, dans lequel sur le terminal de saisie (20, 30) est agencé un élément tactile (24, 35o, 35u, 36o, 36u, 37o, 37u) à l'aide duquel il est possible de sélectionner le nombre d'intervalles de déplacement de réglage (I) par des mouvements identiques répétés.

12. Système selon la revendication 11, dans lequel l'élément tactile est un joystick (24), qui peut être déplacé dans au moins une position tactile supérieure (T₁) pour augmenter la hauteur de travail (H), et dans au moins une position tactile inférieure (T₂) opposée à la précédente, pour diminuer la hauteur de travail (H).

13. Système selon la revendication 11 ou la revendication 12, dans lequel le joystick (24) peut être déplacé dans au moins une position tactile diagonale gauche (T₃) pour régler une hauteur de travail gauche d'au moins une toupie d'andaineuse gauche (6a, 6b), et dans au moins une position tactile diagonale droite pour régler une hauteur de travail droite d'au moins une toupie d'andaineuse droite (6c, 6d).

14. Système selon la revendication 10, dans lequel le terminal de saisie (20, 30) comprend une unité d'affichage (31) sensible à l'effleurement, sur laquelle peut être affiché au moins un élément tactile virtuel (35o, 35u, 36o, 36u, 37o, 37u) pour la saisie du nombre d'intervalles de déplacement de réglage (I).
